(19) Europäisches Patentamt
European Patent Office
Office européen des brevets

(11) EP 3 356 461 B1

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16775664.2**

(22) Anmeldetag: **29.09.2016**

(51) Int Cl.:
***C08K 5/17*** *(2006.01)* ***C08L 69/00*** *(2006.01)*

(86) Internationale Anmeldenummer:
**PCT/EP2016/073215**

(87) Internationale Veröffentlichungsnummer:
**WO 2017/055416 (06.04.2017 Gazette 2017/14)**

(54) **POLYCARBONAT-ZUSAMMENSETZUNGEN MIT VERBESSERTER STABILISIERUNG**

POLYCARBONATE COMPOSITIONS WITH IMPROVED STABILIZATION

COMPOSITIONS DE POLYCARBONATE PRÉSENTANT UNE STABILISATION AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2015 EP 15188176**

(43) Veröffentlichungstag der Anmeldung:
**08.08.2018 Patentblatt 2018/32**

(73) Patentinhaber: **Covestro Deutschland AG**
**51373 Leverkusen (DE)**

(72) Erfinder:
- **SEIDEL, Andreas**
**41542 Dormagen (DE)**
- **HUFEN, Ralf**
**47239 Duisburg (DE)**
- **THIEM, Hans-Jürgen**
**41539 Dormagen (DE)**

(74) Vertreter: **Levpat**
**c/o Covestro AG**
**Gebäude 4825**
**51365 Leverkusen (DE)**

(56) Entgegenhaltungen:
**EP-A2- 0 194 719**
**WO-A1-2007/065579**
**WO-A1-2008/122359**
**WO-A1-2009/118114**
**WO-A1-2010/063381**
**DE-A1- 19 753 542**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft thermoplastische Polycarbonat-Zusammensetzungen enthaltend brönstedsaure Verbindungen, ein Verfahren zur Herstellung von thermoplastischen Polycarbonat-Zusammensetzungen, die Verwendung der Zusammensetzungen zur Herstellung von Formkörpern und die Formkörper selbst.

Bei der Herstellung von Polycarbonat-Zusammensetzungen sollen oft alkalisch wirkende oder alkalisch wirkende Bestandteile enthaltende Komponenten zum Einsatz kommen, weil damit bestimmte gewünschte technische Eigenschaften oder Funktionen erzielt werden können oder aber eine weitere Aufarbeitung (Reinigung) der Komponenten verfahrenstechnisch nicht sinnvoll, nicht möglich oder aus wirtschaftlichen Gründen nicht gewollt ist.

Bei den alkalisch wirkenden Bestandteilen, die in den zur Herstellung von schlagzähmodifizierten Polycarbonat-Zusammensetzungen zum Einsatz kommenden Komponenten enthalten sein können, handelt es sich beispielsweise um herstellungsbedingte Verunreinigungen und/oder um den Komponenten bewusst zugesetzte Additive.

So weisen beispielsweise viele handelsübliche Füllstoffe wie beispielsweise Talk oder andere handelsübliche Polymeradditive wie beispielsweise einige Antistatika (beispielsweise Polyetheramide), Gleit- und Entformungsmittel (beispielsweise Ethylenbisstearamid), Stabilisatoren (beispielsweise als Lichtschutzmittel zum Einsatz kommende Benzotriazole oder sterisch gehinderte Amine), Pigmente (beispielsweise Titandioxid), Stickstoff-enthaltende organische Farbstoffe (beispielsweise Azoverbindungen oder Pyrazolone) und Stickstoff-enthaltende Flammschutzmittel (beispielsweise Phosphonatamine) ein alkalisches Verhalten auf oder aber enthalten alkalisch wirkende Bestandteile. Außerdem enthalten Schlagzähmodifikatoren, die bei der Herstellung/Compoundierung von Polycarbonat-Zusammensetzungen verwendet werden, herstellungsbedingt oft alkalisch wirkende Bestandteile. Dazu zählen auch Restmengen alkalisch wirkender Substanzen, welche als Polymerisationshilfsstoffe, beispielsweise als Emulgatoren in der Emulsionspolymerisation oder in den Aufarbeitungsprozessen, beispielsweise bei der Fällung als Hilfsstoffe eingesetzt werden. Auch das Polycarbonat selbst kann herstellungsbedingt Restmengen alkalischer wirkender Bestandteile enthalten, wie beispielsweise Spuren an Natriumhydroxid aus der Wäsche und/oder alkalisch wirkende Polymerisationskatalysatoren.

Die alkalisch wirkenden Komponenten oder Bestandteile können bei hohen Temperaturen, wie sie typischerweise bei der Herstellung und Verarbeitung der Polycarbonat-Formmassen auftreten, das Polycarbonat katalytisch zersetzen. Ein solcher Polycarbonatabbau äußert sich oft in einer Schädigung der Eigenschaften der Formmassen oder durch Oberflächenveränderungen. Dadurch wird die Auswahl der möglichen Einsatzstoffe für solche Polycarbonat-Zusammensetzungen sehr stark eingeschränkt.

Aus dem Stand der Technik ist bekannt, Polycarbonat-Zusammensetzungen zur Neutralisation der schädlichen Wirkung alkalischer Komponenten oder alkalisch wirkender Bestandteile saure Verbindungen zuzusetzen.

WO 85/02622 A1 offenbart farbstabilisierte Polycarbonat-Polyester-Zusammensetzungen enthaltend aromatisches Polycarbonat, Polyester und 0,01 bis 1,00 Gew.-% einer phosphorsauren Verbindung ausgewählt aus der Gruppe bestehend aus phosphoriger Säure, Phenylphosphonsäure und mit fluorierten Kohlenwasserstoffgruppen substituierten Derivaten der phosphorigen Säure.

JP 02-018332 B offenbart mit 2-20 ppm phosphorige Säure und 50-300 ppm Tris(2,6-Di-tert.-butylphenyl)phosphit stabilisierte Polycarbonatharze mit guten mechanischen Eigenschaften, Heißwasserresistenz und reduzierter Vergilbung unter thermischer Belastung.

US 2006/0287422 A1 beschreibt thermoplastische Zusammensetzungen enthaltend Polycarbonat, mineralischen Füllstoff und eine Säure oder ein saures Salz, sowie optional weitere thermoplastische Polymere als Blendpartner, beispielsweise ausgewählt aus der Gruppe enthaltend Polyester und (kautschukmodifizierte) Vinyl(co)polymere. Die Anmeldung offenbart, dass durch den Zusatz der Säure oder des sauren Salzes der thermisch induzierte Polycarbonatmolekulargewichtsabbau reduziert und die Schlagzähigkeit und Duktilität dadurch verbessert wird.

EP 0 576 950 A2 und WO 2007/065579 A1 beschreiben alkalische Bestandteile enthaltende Polycarbonat-ABS-Zusammensetzungen, die mit organischen Carbonsäuren stabilisiert werden.

In der WO 2010/063381 A1 werden schlagzähmodifizierte Polycarbonat-Zusammensetzungen mit verbesserter Kombination aus Hydrolyse- und Verarbeitungsstabilität beschrieben enthaltend Polycarbonat, ein alkalisch verunreinigtes Emulsionspfropfpolymerisat und eine saure Phosphorverbindung mit mindestens einer P-OH-Funktionalität.

WO 2009/118114 A1 offenbart Polycarbonat-Zusammensetzungen mit verbesserter Kombination aus hellem Rohton sowie guter Hydrolyse- und Verarbeitungsstabilität enthaltend Polycarbonat, kautschukmodifiziertes Pfropfpolymerisat enthaltend herstellungsbedingte Rückstände eines Fettsäuresalz-Emulgators, wobei das Pfropfpolymerisat in wässriger Dispersion einen pH-Wert von größer als 7 aufweist, und ein saures Additiv. Als saure Additive werden in dieser Anmeldung hydroxyfunktionalisierte Mono- und Polycarbonsäuren sowie Phosphorsäure und Natrium-/ Kaliumsalze der Phosphorsäure offenbart.

WO 2013/060687 A1 offenbart Polycarbonat-Zusammensetzungen mit gutem Rohton, verbesserter Thermostabilität und verbesserter Verarbeitungsstabilität, gemessen an der Stabilität des Glanzgrades unter Variation der Verarbeitungstemperatur, enthaltend eine Brönsted-saure Verbindung aufgezogen auf einem anorganischen oder organischen Adsorber oder Absorber. Beispielhaft werden als Brönsted-saure Verbindung Phosphorsäure, phosphorige Säure,

Phosphinsäure sowie deren alkylierte bzw. arylierte Derivate offenbart.

WO 2013/060685 A1 offenbart ein Verfahren zur Herstellung stabilisierter schlagzähmodifizierter Polycarbonat-Zusammensetzungen, bei welchem eine saure Verbindung in einer hochverdünnten wässrigen Lösung auf ein Pfropfpolymerpulver aufgezogen wird, bevor dieses so mit der wässrigen Säurelösung angefeuchtete Pulver in die Compoundierung eingebracht wird.

Der Zusatz der im Stand der Technik beschriebenen Säuren führt aber häufig zu nachteiligen Eigenschaften bei den Polycarbonat-Zusammensetzungen wie starken Molekulargewichtsabbau oder Auftreten von Oberflächendefekten unter feucht-warmen Lagerungsbedingungen, Verschlechterung des Rohtons und/oder starke Veränderung des Oberflächenglanzes bei hohen Verarbeitungstemperaturen oder aber erlaubt nur ein stabiles Herstellverfahren innerhalb eines sehr beschränkten thermischen Prozessfensters.

Es bestand daher ein Bedürfnis, Polycarbonat-Zusammensetzungen bereitzustellen, die sich auch bei Einsatz einer oder mehrerer alkalisch wirkender oder alkalisch wirkende Bestandteile enthaltender Ausgangskomponenten durch eine verbesserte Kombination aus heller Eigenfarbe, hohem Glanzgrad, guter Verarbeitungsstabilität gemessen am Abbau des Polycarbonat-Molekulargewichtes sowie an der Änderung der Eigenfarbe (Vergilbung) und Änderung (Reduktion) des Glanzgrades unter der thermischen Belastung bei der Umformung und einer verbesserten Hydrolysestabilität gemessen am Abbau des Polycarbonat-Molekulargewichtes in einem feucht-warmen Klima mit hoher relativer Luftfeuchtigkeit auszeichnen und sich zur Herstellung von Formkörpern mit einer Oberfläche mit hohem Glanzgrad und wenigen Oberflächendefekten nach Wärme-Feucht-Lagerung eignen.

Es war weiterhin wünschenswert, Polycarbonat-Zusammensetzungen bereitzustellen, die die vorteilhaften Eigenschaften auch dann aufweisen, wenn mindestens eine zur Herstellung der Zusammensetzungen verwendete Ausgangskomponente ein Polymer ist, welches herstellungsbedingt ein Alkali-, Erdalkali-, Aluminium- oder Übergangsmetallsalz einer starken Mineralsäure, beispielsweise ein Chlorid-, Sulfat- oder Nitrat-Salz enthält.

Es wurde nun überraschenderweise gefunden, dass Zusammensetzungen enthaltend

A) mindestens ein Polymer ausgewählt aus der Gruppe der aromatischen Polycarbonate und aromatischen Polyestercarbonate und
B) mindestens eine brönsted-saure Verbindung ausgewählt aus der Gruppe bestehend aus Verbindungen der allgemeinen Formeln (I) und (II)

$$(R1)_{y1}\text{-N-}[R2\text{-COOH}]_{x1} \qquad (I)$$

$$[HOOC\text{-}R2]_{x2}(R1)_{y2}N\text{-}(R3)\text{-}N(R1)_{y3}[R2\text{-COOH}]_{x3} \qquad (II)$$

wobei
R1 für optional funktionalisiertes oder mit Heteroatomen substituiertes Alkyl, Aryl oder Cycloalkyl,
R2 für $C_1$- bis $C_8$-Alkylen oder $C_2$- bis $C_8$-Alkyliden, bevorzugt $C_1$- bis $C_4$-Alkylen oder $C_2$- bis $C_4$-Alkyliden, weiter bevorzugt $C_1$- bis $C_2$-Alkylen oder $C_2$- bis $C_3$-Alkyliden, ganz besonders bevorzugt Methylen,
R3 für $-(CH_2)n-$, $-(CH_2)n[O(CH_2)_n]_m-$ oder $-(CH_2)n[NR4(CH_2)_n]_m-$,
n für eine ganze Zahl, bevorzugt für 1 oder 2, besonders bevorzugt für 2
m für eine ganze Zahl, bevorzugt für 1 oder 2,
R4 für optional funktionalisiertes oder mit Heteroatomen substituiertes Alkyl, Aryl oder Cycloalkyl, bevorzugt für $-CH_2COOH$,
x1 für eine ganze Zahl zwischen 1 und 3, bevorzugt für 3,
x2 und x3 jeweils für 1 oder 2, bevorzugt für 2,
stehen und
y1 sich durch die Formel y1 = 3 - x1,
y2 sich durch die Formel y2 = 2 - x2
und y3 sich durch die Formel y3 = 2 - x3
berechnen,
und wobei in Verbindungen mit mehreren Resten R1 und/oder R2 diese unabhängig voneinander verschiedene oder gleiche Reste der zuvor genannten Definitionen darstellen können,
die vorteilhaften Eigenschaften aufweisen.

Die erfindungsgemäßen Zusammensetzungen enthalten bevorzugt 0,00001 bis 0,5 Gew.-% der Komponente B.

In einer Ausführungsform werden die Zusammensetzungen hergestellt unter Einsatz einer oder mehrerer alkalisch wirkender oder alkalisch wirkende Bestandteile enthaltender Komponenten.

In einer bevorzugten Ausführungsform enthalten die Zusammensetzungen neben den Komponenten A und B weiterhin als Komponente C eine oder mehrere kautschukhaltige Pfropfpolymerisate und/oder kautschukfreie Vinyl(co)polymerisate.

In einer weiteren bevorzugten Ausführungsform enthalten die Zusammensetzungen neben A und B weiterhin als Komponente D Additive.

In einer weiteren bevorzugten Ausführungsform enthalten die Zusammensetzungen die Komponenten A, B, C und D.

In einer weiteren Ausführungsform enthalten die Zusammensetzungen neben A, B, optional C und optional D weiterhin als Komponente E ein oder mehrere Polyester. In diesen Zusammensetzungen wird als Komponente C bevorzugt nur kautschukhaltiges Pfropfpolymerisat eingesetzt.

In einer bevorzugten Ausführungsform bestehen die Zusammensetzungen aus den Komponenten A, B, C und D.

In einer weiteren Ausführungsform enthalten die Zusammensetzungen ein Polymer, welches ein Alkali-, Erdalkali-, Aluminium- oder Übergangsmetallsalz einer starken Mineralsäure, beispielsweise ein Chlorid-, Sulfat- oder Nitrat-Salz enthält.

In einer speziellen Ausführungsform enthalten die Zusammensetzungen ein Polymer, welches ein Erdalkalisalz einer starken Mineralsäure enthält, beispielsweise Magnesiumsulfat und/oder Calciumchlorid.

In einer weiteren speziellen Ausführungsform ist dieses Salz in der Komponente C enthalten.

In einer bevorzugten Ausführungsform wird die Komponente B in der minimal zur Erreichung der gewünschten Verarbeitungsstabilität notwendigen Menge eingesetzt. Diese Menge hängt von Art und Mengen der in der jeweiligen Zusammensetzung zum Einsatz kommenden alkalisch wirkenden und/oder alkalisch wirkende Bestandteile enthaltenden Komponenten ab und ist insofern nicht allgemein zu beziffern, sondern für die jeweilige Zusammensetzung durch eine Reihe von Versuchen mit unterschiedlicher Menge an Komponente B experimentell zu ermitteln.

Es bestand weiterhin das Bedürfnis, ein auch bei Einsatz einer oder mehrerer alkalisch wirkender oder alkalisch wirkende Bestandteile enthaltender Ausgangskomponenten über ein erweitertes Prozessfenster, d. h. auch bei erhöhten Schmelzetemperaturen und/oder verlängerten Verweilzeiten stabiles thermisches Verfahren zur Herstellung von thermoplastischen Polycarbonat-Zusammensetzungen mit den zuvor beschriebenen Eigenschaften bereitzustellen.

Ein weiterer Gegenstand der Erfindung ist daher ein Verfahren enthaltend die Schritte (i), (ii) und optional (iii), dadurch gekennzeichnet, dass
in einem ersten Schritt (i)
die oben genannten Komponenten A) und B) und optional weitere Komponenten durch Zuführung thermischer und/oder mechanischer Energie aufgeheizt werden, mindestens die Komponente A dadurch aufgeschmolzen wird, die Komponenten ineinander dispergiert werden und nachfolgend die resultierende, als Schmelze vorliegende Zusammensetzung optional durch Anlegen eines Unterdrucks entgast wird,
und in einem weiteren Schritt (ii)
die resultierende Zusammensetzung durch Abkühlen wieder verfestigt wird
und in einem weiteren Schritt (iii) granuliert wird,
wobei diese weiteren Schritte (ii) und (iii) in beliebiger Reihenfolge durchgeführt werden können.

Das heißt, es kann bei Verfahren, bei denen sowohl die Schritte (ii) als auch (iii) zum Einsatz kommen, entweder zunächst die Schmelze abgekühlt und dadurch verfestigt und anschließend granuliert werden, oder aber alternativ die Schmelze geschnitten und danach durch Abkühlung verfestigt werden.

Als Beispiel für die zuerst genannte Ausführungsform sei die Stranggranulation, als Beispiel für die alternative Ausführungsform die Unterwassergranulation genannt.

In einer Ausführungsform werden in diesem Verfahren eine oder mehrere alkalisch wirkende oder alkalisch wirkende Bestandteile enthaltende Komponenten eingesetzt.

Das erfindungsgemäße Verfahren wird mittels Schmelzecompoundierungsaggregaten durchgeführt. Bevorzugte Aggregate sind Einwellenextruder mit oder ohne Knetstiften, Innenkneter, Co-Kneter, Planetwalzenextruder, Ringextruder sowie Zwei- oder Mehrwellenextruder. Die Zwei- oder Mehrwellenextruder können in gleich- oder gegenläufig rotierender sowie dicht kämmender oder tangierender Ausführung verwendet werden.

Besonders bevorzugt sind Co-Kneter, gleichläufig rotierende Zwei- oder Mehrwellenextruder sowie Ringextruder.

Besonders bevorzugt sind gleichläufig rotierende, dichtkämmende Doppelwellenextruder.

Bezüglich der in dem erfindungsgemäßen Verfahren eingesetzten Komponenten gelten dieselben Vorzugsbereiche wie oben für die erfindungsgemäßen Zusammensetzungen beschrieben.

In einer bevorzugten Ausführungsform werden die erfindungsgemäßen Zusammensetzungen in dem erfindungsgemäßen Verfahren hergestellt aus:

> 10 bis 99,995 Gew.-Teilen, weiter bevorzugt 30 bis 95 Gew.-Teilen, besonders bevorzugt 40 bis 90 Gew.-Teilen und ganz besonders bevorzugt 50 bis 80 Gew.-Teilen der Komponente A,
> 0,00001 bis 0,5 Gew.-Teilen, weiter bevorzugt 0,0001 bis 0,3 Gew.-Teilen, besonders bevorzugt 0,001 bis 0,2 Gew.-Teilen und ganz besonders bevorzugt 0,01 bis 0,1 Gew.-Teilen der Komponente B,

0 bis 90 Gew.-Teilen, weiter bevorzugt 0 bis 70 Gew.-Teilen, besonders bevorzugt 1 bis 60 Gew.-Teilen und ganz besonders bevorzugt 10 bis 50 Gew.-Teilen der Komponente C,
0 bis 50 Gew.-Teilen, weiter bevorzugt 0,1 bis 40 Gew.-Teilen, besonders bevorzugt 0,2 bis 30 Gew.-Teilen und ganz besonders bevorzugt 0,5 bis 25 Gew.-Teilen der Komponente D,
wobei die Summe der Gewichtsteile der Komponenten A bis D auf 100 normiert ist.

In einer weiteren Ausführungsform werden die erfindungsgemäßen Zusammensetzungen in dem erfindungsgemäßen Verfahren hergestellt aus:

10 bis 99,995 Gew.-Teilen, weiter bevorzugt 30 bis 95 Gew.-Teilen, besonders bevorzugt 40 bis 90 Gew.-Teilen und ganz besonders bevorzugt 50 bis 80 Gew.-Teilen der Komponente A,
0,00001 bis 0,5 Gew.-Teilen, weiter bevorzugt 0,0001 bis 0,3 Gew.-Teilen, besonders bevorzugt 0,001 bis 0,2 Gew.-Teilen und ganz besonders bevorzugt 0,01 bis 0,1 Gew.-Teilen der Komponente B,
0 bis 50 Gew.-Teilen, weiter bevorzugt 0 bis 40 Gew.-Teilen, besonders bevorzugt 1 bis 30 Gew.-Teilen und ganz besonders bevorzugt 5 bis 20 Gew.-Teilen der Komponente C,
0 bis 50 Gew.-Teilen, weiter bevorzugt 0,1 bis 40 Gew.-Teilen, besonders bevorzugt 0,2 bis 30 Gew.-Teilen und ganz besonders bevorzugt 0,5 bis 25 Gew.-Teilen der Komponente D,
1 bis 90 Gew.-Teilen, weiter bevorzugt 10 bis 70 Gew.-Teilen, besonders bevorzugt 15 bis 60 Gew.-Teilen und ganz besonders bevorzugt 20 bis 50 Gew.-Teilen der Komponente E,
wobei für den Fall, dass Komponente E zum Einsatz kommt, Komponente C ausgewählt ist aus einem oder mehreren Pfropfpolymerisaten mit Gelgehalten von jeweils mindestens 75 Gew.-% bezogen auf die Komponente C und wobei die Summe der Gewichtsteile der Komponenten A bis E auf 100 normiert ist.

Eine weitere Ausführungsform der Erfindung ist ein Verfahren zur Verbesserung der Kombination aus heller Eigenfarbe, hohem Glanzgrad, guter Verarbeitungsstabilität und Hydrolysestabilität von Polycarbonat-Zusammensetzungen, bei dem eine oder mehrere alkalisch wirkende oder alkalisch wirkende Bestandteile enthaltende Ausgangskomponenten sowie mindestens eine Säure gemäß Komponente B eingesetzt werden und bei dem die benötigte Menge der Säure experimentell, bevorzugt durch eine Versuchsreihe mit verschiedenen Säurekonzentrationen, ermittelt wird.
Eine weitere Ausführungsform der Erfindung ist die Verwendung von brönsted-sauren Verbindungen gemäß Formel (I) oder (II) zur Stabilisierung von Polycarbonat-Zusammensetzungen, die optional aus einer oder mehrerer alkalisch wirkende oder alkalisch wirkende Bestandteile enthaltender Ausgangskomponenten hergestellt werden.
Eine besondere Ausführungsform der Erfindung ist die Verwendung von brönsted-sauren Verbindungen gemäß Formel (I) oder (II) zur Verbesserung der Kombination aus heller Eigenfarbe, hohem Glanzgrad, guter Verarbeitungsstabilität und Hydrolysestabilität von Polycarbonat-Zusammensetzungen, die optional aus einer oder mehrerer alkalisch wirkende oder alkalisch wirkende Bestandteile enthaltender Ausgangskomponenten hergestellt werden.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).
Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.
Diphenole zur Herstellung der aromatischen Polycarbonate und/oder aromatischen Polyestercarbonate sind vorzugsweise solche der Formel (I)

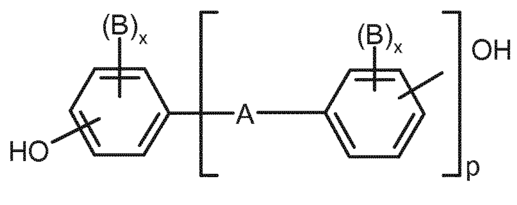

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

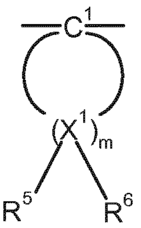

(II)

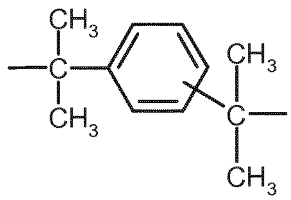

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
$X^1$ Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$c_1$-$c_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäwetrichlorid, Cyanursäuretrichlorid, 3,3'-,4,4'-Benzophenontetracarbonsäuretetrachlorid, 1,4,5,8-Napthalintetracarbon-säuretetrachlorid oder Pyromellithsäwetetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methylbenzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In einer bevorzugten Ausführungsform weist die Komponente A ein gewichtsgemitteltes Molekulargewicht Mw (ermittelt durch Gelpermeationschromatographie (GPC) in Methylenchlorid mit Polycarbonat als Standard) von 15000 g/mol bis 50000 g/mol, bevorzugt von 22000 g/mol bis 35000 g/mol, insbesondere von 24000 bis 32000 g/mol auf.

Als Komponente A kann ein Polycarbonat oder Polyestercarbonat oder eine Mischung mehrerer Polycarbonate und/oder Polyestercarbonate gemäß der Beschreibung zuvor zum Einsatz kommen.

## Komponente B

Bei der Komponente B handelt es sich um brönsted-saure Verbindungen ausgewählt aus der Gruppe bestehend aus Verbindungen der allgemeinen Formeln (I) und (II)

$$(R1)yi\text{-}N\text{-}[R2\text{-}COOH]_{x1} \qquad (I)$$

$$[HOOC\text{-}R2]_{x2}(R)y_2N\text{-}(R3)\text{-}N(R1)y_3[R2\text{-}COOH]_{x3} \qquad (II)$$

wobei

R1 für optional funktionalisiertes oder mit Heteroatomen substituiertes Alkyl, Aryl oder Cycloalkyl,

R2 für $C_1$- bis $C_8$-Alkylen oder $C_2$- bis $C_8$-Alkyliden, bevorzugt $C_1$- bis $C_4$-Alkylen oder $C_2$- bis $C_4$-Alkyliden, weiter bevorzugt $C_1$- bis $C_2$-Alkylen oder $C_2$- bis $C_3$-Alkyliden, ganz besonders bevorzugt Methylen,

R3 für $-(CH_2)n-$, $-(CH_2)n[O(CH_2)_n]_m-$ oder $-(CH_2)n[NR4(CH_2)_n]_m-$,

n für eine ganze Zahl, bevorzugt für 1 oder 2, besonders bevorzugt für 2,

m für eine ganze Zahl, bevorzugt für 1 oder 2,

R4 für optional funktionalisiertes oder mit Heteroatomen substituiertes Alkyl, Aryl oder Cycloalkyl, bevorzugt für $-CH_2COOH$,
x1 für eine ganze Zahl zwischen 1 und 3, bevorzugt für 3,
x2 und x3 jeweils für 1 oder 2, bevorzugt für 2 stehen
und
y1 sich durch die Formel y1 = 3 - x1,
y2 sich durch die Formel y2 = 2 - x2
und y3 sich durch die Formel y3 = 2 - x3
berechnen
und wobei in Verbindungen mit mehreren Resten R1 und/oder R2 diese unabhängig voneinander verschiedene oder gleiche Reste der zuvor genannten Definitionen darstellen können.

Bevorzugt ist Komponente B ausgewählt aus den folgenden Verbindungen:

Ethylendiamintetraessigsäure (EDTA)

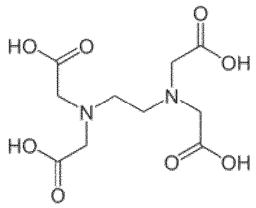

Nitriloessigsäure

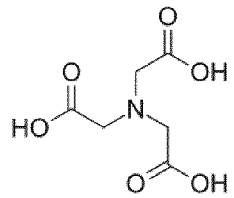

Ethylenglycol-bis(aminoethylether)-N,N,N′,N′-tetraessigsäure (EGTA)

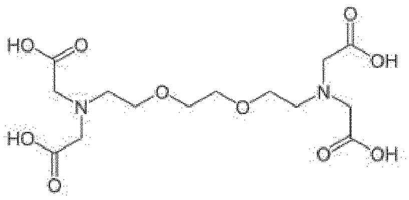

Diethylentriaminpentaessigsäure (DTPA)

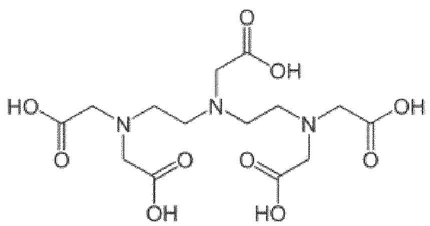

Besonders bevorzugt handelt es sich bei der Komponente B um Ethylendiamintetraessigsäure (EDTA).

**Komponente C**

Bei der Komponente C handelt es sich um C1, C2 oder C3 oder um eine Mischung aus mehreren dieser Komponenten.

Komponente C1

Bei der Komponente C1 handelt es sich um Pfropfpolymerisate, hergestellt im Emulsionspolymersiationsverfahren, von
C1.1) 5 bis 95 Gew.-%, vorzugsweise 10 bis 70 Gew.-%, besonders bevorzugt 20 bis 60 Gew.-%, bezogen auf die Komponente C1, einer Mischung aus
C1.1.1) 65 bis 85 Gew.-%, bevorzugt 70 bis 80 Gew.-%, bezogen auf C1.1, mindestens eines Monomeren ausgewählt aus der Gruppe der Vinylaromaten (wie beispielsweise Styrol, α-Methylstyrol), kemsubstituierten Vinylaromaten (wie

beispielsweise p-Methylstyrol, p-Chlorstyrol) und Methacrylsäure-(C1-C8)-Alkylester (wie beispielsweise Methylmethacrylat, Ethylmethacrylat) und

C1.1.2) 15 bis 35 Gew.-%, bevorzugt 20 bis 30 Gew.-%, bezogen auf C1.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)

auf

C1.2) 95 bis 5 Gew.-%, vorzugsweise 90 bis 30 Gew.-%, besonders bevorzugt 80 bis 40 Gew.-%, bezogen auf die Komponente C1, wenigstens einer elastomeren Pfropfgrundlage.

Die Pfropfgrundlage hat bevorzugt eine Glasübergangstemperatur < 0°C, weiter bevorzugt < - 20°C, besonders bevorzugt <-60°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Die Pfropfpartikel in der Komponente C1 weisen bevorzugt eine mittlere Teilchengröße (D50-Wert) von 0,1 bis 0,8 μm, vorzugsweise von 0,15 bis 0,6 μm, besonders bevorzugt von 0,2 bis 0,5 μm auf.

Die mittlere Teilchengröße D50 ist der Durchmesser, oberhalb und unterhalb dessen jeweils 50 Gew.-% der Teilchen liegen.

Die Pfropfpartikelteilchengrößenverteilung und daraus abgeleitete Werte werden mittels Ultrazentrifugenmessung (W. Scholtan, H. Lange, Kolloid, Z. und Z. Polymere 250 (1972), 782-796) bestimmt.

In bevorzugter Ausführungsform enthält das Emulsionspfropfpolymerisat gemäß Komponente C1 weniger als 15 Gew.-%, besonders bevorzugt weniger als 10 Gew.-%, ganz besonders bevorzugt weniger als 5 Gew.-%, bezogen auf den Gelanteil des Polymerisats, Pfropfpartikel mit einem Partikeldurchmesser von über 800 nm.

Bevorzugte Monomere C1.1.1 sind ausgewählt aus mindestens einem der Monomere Styrol, α-Methylstyrol und Methylmethacrylat, bevorzugte Monomere C1.1.2 sind ausgewählt aus mindestens einem der Monomere Acrylnitril, Maleinsäureanhydrid und Methylmethacrylat.

Besonders bevorzugte Monomere sind C1.1.1 Styrol und C1.1.2 Acrylnitril.

Für die Pfropfpolymerisate C1 geeignete Pfropfgrundlagen C1.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verknüpft sind.

Bevorzugte Pfropfgrundlagen C1.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß C1.1.1 und C1.1.2) und Mischungen aus den zuvor genannten Kautschuktypen. Besonders bevorzugt sind reiner Polybutadienkautschuk und Styrol-Butadien-Blockcopolymerkautschuk.

Der Gelanteil der Pfropfpolymerisate beträgt mindestens 15 Gew.-%, bevorzugt mindestens 60 Gew.-%, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate C1 werden hergestellt durch radikalische Polymerisation.

Das Pfropfpolymerisat C1 umfasst herstellungsbedingt im Allgemeinen freies, d.h. nicht chemisch an die Kautschukgrundlage gebundenes Copolymerisat aus C1.1.1 und C1.1.2, das in geeigneten Lösungsmitteln (z.B. Aceton) löslich ist.

Komponente C2

Bei der Komponente C2 handelt es sich um Pfropfpolymerisate, hergestellt im Masse-, Lösungs- oder Suspensionspolymerisationsverfahren, von

C2.1) 5 bis 95 Gew.-%, vorzugsweise 80 bis 93 Gew.-%, besonders bevorzugt 85 bis 92 Gew.-%, ganz besonders bevorzugt 87 bis 93 Gew.-%, bezogen auf die Komponente C2, einer Mischung aus

C2.1.1) 65 bis 85 Gew.-%, bevorzugt 70 bis 80 Gew.-%, bezogen auf die Mischung C.2.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und

C2.1.2) 15 bis 35 Gew.-%, bevorzugt 20 bis 30 Gew.-% bezogen auf die Mischung C2.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)

auf

C2.2) 95 bis 5 Gew.-%, vorzugsweise 20 bis 7 Gew.-%, besonders bevorzugt 15 bis 8 Gew.-%, ganz besonders bevorzugt 13 bis 7 Gew.-%, bezogen auf die Komponente C2, wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Pfropfpartikel in der Komponente C2 weisen bevorzugt eine mittlere Teilchengröße (D50-Wert) von 0,1 bis 2 $\mu$m, vorzugsweise von 0,2 bis 1 $\mu$m, besonders bevorzugt von 0,3 bis 0,7 $\mu$m auf.

Die Pfropfpartikelteilchengrößenverteilung und daraus abgeleitete Werte werden mittels Ultrazentrifugenmessung (W. Scholtan, H. Lange, Kolloid, Z. und Z. Polymere 250 (1972), 782-796) bestimmt.

In bevorzugter Ausführungsform enthält das Pfropfpolymerisat gemäß Komponente C2 weniger als 40 Gew.-%, besonders bevorzugt weniger als 30 Gew.-%, insbesondere weniger als 20 Gew.-%, bezogen auf den Gelanteil des Pfropfpolymersiats, Pfropfpartikel mit einem Partikeldurchmesser von über 800 nm.

Bevorzugte Monomere C2.1.1 sind ausgewählt aus mindestens einem der Monomere Styrol, $\alpha$-Methylstyrol und Methylmethacrylat, bevorzugte Monomere C2.1.2 sind ausgewählt aus mindestens einem der Monomere Acrylnitril, Maleinsäureanhydrid und Methylmethacrylat.

Besonders bevorzugte Monomere sind C2.1.1 Styrol und C2.1.2 Acrylnitril.

Bevorzugte Pfropfgrundlagen C2.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß C2.1.1 und C2.1.2) und Mischungen aus den zuvor genannten Kautschuktypen. Besonders bevorzugt als Pfropfgrundlage C2.2 sind Polybutadienkautschuk, Styrol-Butadien-Blockcopolymerkautschuke und Mischungen von Styrol-Butadien-Blockcopolymerkautschuken mit Polybutadienkautschuk.

Der Gelanteil der Pfropfpolymerisate C2 beträgt vorzugsweise 10 bis 40 Gew.-%, besonders bevorzugt 15 bis 30 Gew.-%, ganz besonders bevorzugt 17 bis 23 Gew.-% (gemessen in Aceton).

Besonders bevorzugte Polymerisate C2 sind z.B. ABS-Polymerisate hergestellt durch radikalische Polymerisation, welche in bevorzugter Ausführungsform bis zu 10 Gew.-%, besonders bevorzugt bis zu 5 Gew.-%, besonders bevorzugt 2 bis 5 Gew.-%, jeweils bezogen auf das Pfropfpolymerisat C2, an n-Butylacrylat enthalten.

Das Pfropfpolymerisat C2 umfasst im Allgemeinen herstellungsbedingt freies, d.h. nicht chemisch an die Kautschukgrundlage gebundenes Copolymerisat aus C2.1.1 und C2.1.2, welches sich dadurch auszeichnet, dass es in geeigneten Lösungsmittel (z.B. Aceton) gelöst werden kann.

Bevorzugt enthält die Komponente C2 freies Copolymerisat aus C2.1.1 und C2.1.2, welches ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 160000 g/mol, besonders bevorzugt von 80000 bis 120000 g/mol aufweist.

Komponente C3

Die Zusammensetzung kann als weitere Komponente C3 (Co)Polymerisate von mindestens einem Monomeren aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren enthalten.

Insbesondere geeignet sind als Komponente C3 (Co)Polymerisate aus

C3.1 50 bis 99 Gew.-%, bevorzugt 65 bis 85 Gew.-%, besonders bevorzugt 70 bis 80 Gew.-% bezogen auf das (Co)Polymerisat C3 mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und

C3.2 1 bis 50 Gew.-%, bevorzugt 15 bis 35 Gew.-%, besonders bevorzugt 20 bis 30 Gew.-% bezogen auf das (Co)Polymerisat C3 mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate C3 sind harzartig, thermoplastisch und kautschukfrei. Besonders bevorzugt ist das Copolymerisat aus C3.1 Styrol und C3.2 Acrylnitril.

Derartige (Co)Polymerisate C3 sind bekannt und lassen sich durch radikalische Polymerisation, insbesondere

durch Emulsions-, Suspensions-, Lösungs- oder Massepolymerisation herstellen. Die (Co)Polymerisate C3 besitzen ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 150000 g/mol, besonders bevorzugt von 80000 bis 120000 g/mol.

## Komponente D

Die Zusammensetzung kann als Komponente D ein oder mehrere weitere von den Komponenten A, B, C und E verschiedene Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Verträglichkeitsvermittlern, weiteren Schlagzähigkeitsmodifikatoren (sowohl mit als auch ohne Kern-Schale-Struktur), weiteren polymeren Bestandteilen (beispielsweise funktionelle Blendpartnern), Füll- und Verstärkungsstoffen (beispielsweise Karbonfasern, Talk, Glimmer, Kaolin, $CaCO_3$) sowie Farbstoffen und Pigmenten (beispielsweise Titandioxid oder Eisenoxid).

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren Schlagzähigkeitsmodifikatoren, weiteren polymeren Bestandteilen, Farbstoffen und Pigmenten.

In besonders bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente C verschiedenen Schlagzähigkeitsmodifikatoren, weiteren polymeren Bestandteilen, Farbstoffen und Pigmenten und ist frei von weiteren Polymeradditiven.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten und Schwefel-basierten Co-Stabilisatoren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Weiter bevorzugte Zusammensetzungen enthalten als Entformungsmittel Pentaerythrittetrastearat, als Stabilisator eine Kombination aus Octadecyl 3-(3,5-di-tert-butyl-4-hydroxyphenyl)propionat und Tris(2,4-di-tert-butylphenyl)phosphit optional mindestens ein Pigment oder Farbmittel und sind frei von weiteren Polymeradditiven.

## Komponente E

Die erfindungsgemäß als Komponente E in Frage kommenden Polyester sind aliphatische oder aromatische Polyester, bevorzugt aromatische Polyester und in besonders bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen bevorzugt eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die nach dem erfindungsgemäßen Verfahren hergestellten Zusammensetzungen (Formmassen) können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die erfindungsgemäßen Zusammensetzungen eignen sich aufgrund ihrer hellen und verarbeitungsstabilen Eigenfarbe besonders für die Selbsteinfärbung durch Zusatz von Farbmittelmasterbatchen direkt bei der thermischen Umformung.

Die erfindungsgemäßen Zusammensetzungen eignen sich des Weiteren besonders auch zur Herstellung von Formkörpern oder Formteilen mit Class-A-Oberflächen-Anforderung und Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen werden können.

Unter "hochglänzend" bzw. "Hochglanz-Finish" verstanden wird im Sinne der vorliegenden Erfindung ein Glanzgrad ermittelt in Reflexion gemäß DIN 67530 bei einem Messwinkel von 60° von mindestens 95, bevorzugt von mindestens 97, besonders bevorzugt von mindestens 99.

Gegenstand der Erfindung sind somit auch Formkörper oder Formteile jeglicher Art aus den erfindungsgemäßen Zusammensetzungen, bevorzugt solcher Formteile mit vollständigem oder partiellen Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen wurden.

## Beispiele

Eingesetzte Komponenten:

### Komponente A

Lineares Polycarbonat auf Basis Bisphenol-A mit einem gewichtsgemittelten Molekulargewicht Mw von 28000 g/mol (bestimmt durch Gelpermeationschromatographie (GPC) in Methylchlorid als Lösungsmittel und mit Polycarbonat als Standard).

Komponente B1

Trilon® BS: Ethylendiamintetraessigsäure (EDTA); BASF (Ludwigshafen, Deutschland)

Komponente B2

Phenylphosphonsäure (98 %), Sigma-Aldrich Chemie GmbH

Komponente B3

Zitronensäure (≥99,5 %), Merck KGaA

Komponente B4

Oxalsäure (≥99,0 %), Sigma-Aldrich Chemie GmbH

Komponente B5

Terephthalsäure (98 %), Sigma-Aldrich Chemie GmbH

Komponente B6

Phosphorige Säure (99 %), Sigma-Aldrich Chemie GmbH

Komponente B7

Fabutit® 313: $Ca(H_2PO_4)_2$; Chemische Fabrik Budenheim KG (Budenheim, Deutschland)

Komponente B8

p-Toluolsulfonsäure (98 %), Alfa Aesar GmbH & Co KG

Komponente C

ABS-Abmischung mit einem Verhältnis von Acrylnitril : Butadien : Styrol, bezogen auf die Abmischung, von 20 : 18 : 62 Gew.-%, enthaltend ein in Emulsionspolymerisation hergestelltes, unter Verwendung von Magnesiumsulfat gefälltes, in alkalischem Milieu aufgearbeitetes und alkalisch wirkende Bestandteile sowie Magnesiumsulfat enthaltendes ABS-Polymerisat, ein in Massepolymerisation hergestelltes ABS-Polymerisat und ein SAN-Polymerisat.

Komponente D1

Pentaerythrittetrastearat als Gleit-/Entformungsmittel

Komponente D2

Thermostabilisator, Irganox® B900 (Gemisch aus 80% Irgafos® 168 (Tris(2,4-di-tert-butyl-phenyl)-phosphit) und 20% Irganox® 1076 (2,6-Di-tert-butyl-4-(octadecanoxycarbonylethyl)-phenol); BASF (Ludwigshafen, Deutschland)

Komponente D3

Thermostabilisator, Irganox® 1076 (2,6-Di-tert-butyl-4-(octadecanoxycarbonylethyl)-phenol); BASF (Ludwigshafen, Deutschland).

Verfahren zur Herstellung von Zusammensetzungen (Formmassen) aus den eingesetzten Komponenten

Im ersten Verfahrensschritt (i) wurden die Komponenten A, B, C und D bei Raumtemperatur vermischt und das Gemisch in die Einzugszone eines Zweiwellenextruder ZSK25 der Fa. Coperion, Werner & Pfleiderer (Stuttgart, Deutschland) mit einem Durchsatz von 20 kg/h gegeben. Die Mischung wurde in der Aufschmelze- und Knetzone des

Extruders bei Drehzahlen von 220 und 500 $min^{-1}$ auf Temperaturen von 260°C bzw. 290°C gebracht und dadurch aufgeschmolzen, bei dieser Temperatur geknetet und dadurch die Komponenten ineinander dispergiert. Die so compoundierte Mischung wurde in der folgenden Entgasungszone des Extruders durch Anlegen eines Unterdrucks von 100 mbar (absolut) an die Schmelze entgast. Im zweiten Verfahrensschritt (ii) wurde die entgaste Schmelze über eine Düse aus dem Extruder bei den zuvor genannten Temperaturen von 260°C bzw. 290°C ausgetragen und der resultierende Schmelzestrang zur Abkühlung durch ein auf ca. 30°C temperiertes Wasserbad geführt.

In einem dritten Verfahrensschritt (iii) wurde der erstarrte Schmelzestrang mittels eines Stranggranulators granuliert.

Herstellung der Prüfkörper und Prüfung

Die aus der jeweiligen Compoundierung resultierenden Granulate wurden auf einer Spritzgussmaschine (Fa. Arburg) bei Schmelzetemperaturen von 260°C bzw. 300°C und einer Werkzeugtemperatur von 80°C zu Probekörpern der Abmessung 60 mm x 40 mm x 2 mm (zur Ermittlung von Gelbwerten und Glanzgraden) und bei einer Schmelzetemperatur von 260°C und einer Werkzeugtemperatur von 80°C zu Probekörpern der Abmessung 150 mm x 105 mm x 3,2 mm (zur Ermittlung des Blisterverhaltens nach Wärme-Feucht-Lagerung) verarbeitet. Beide Probekörpertypen wurden unter Verwendung hochglanzpolierter Spritzgusswerkzeuge hergestellt.

Der **MVR** dient als Maß für etwaigen Polycarbonatmolekulargewichtsabbau bei der thermischen Belastung der Compoundierung und wird an den durch Compoundierung hergestellten Pellets nach Trocknung bei 110°C für 4 h in einem Umlufttrockner nach ISO1133 bei einer Schmelzetemperatur von 300°C mit einer Stempellast von 5 kg nach einer Haltezeit von 5 min ermittelt.

Der **iMVR** wird unter denselben Bedingungen wie der MVR, jedoch mit verlängerter Haltezeit von 15 min bestimmt.

Der relative Anstieg von iMVR gegenüber dem MVR

***ΔMVR(300°C/5kg, 5min→15min) = 100%*** *· (iMVR - MVR) / MVR* dient als Maß für den bei erhöhten Verarbeitungstemperaturen im Spritzguss zu erwartenden Polycarbonatmolekulargewichtsabbau und somit als ein Maß für die **Verarbeitungsstabilität** der Zusammensetzung im Spritzguss.

Der **Rohton** / **die Eigenfarbe** wird in Reflexion gemessen gemäß DIN 6174 an Plättchen der Abmessung 60 mm x 40 mm x 2 mm, welche bei einer Schmelzetemperatur von 260°C bzw. 300°C im Spritzguss hergestellt wurden. Der **Gelbwert** (Yellowness-Index YI) wird nach ASTM E313 berechnet.

Der **Glanzgrad** wird ermittelt an Plättchen der Abmessung 60 mm x 40 mm x 2 mm, welche bei einer Schmelzetemperatur von 260°C bzw. 300°C im Spritzguss hergestellt wurden. Die Messung erfolgt in Reflexion bei einem Messwinkel von 60° gemäß DIN 67530.

Als weitere wichtige Größen zur Charakterisierung der **Verarbeitungsstabilität** dienen die absoluten Änderungen des Gelbwertes sowie des Glanzgrades bei einer Erhöhung der Schmelzetemperatur im Spritzguss von 260°C auf 300°C, welche berechnet werden gemäß

$$\boldsymbol{\Delta Gelbwert\ (260°C \rightarrow 300°C)} = Gelbwert\ (300°C) - Gelbwert(260°C)$$

und

$$\boldsymbol{\Delta Glanzgrad\ (260°C \rightarrow 300°C)} = Glanzgrad\ (300°C) - Glanzgrad\ (260°C).$$

Beurteilt wird, ob der Gelbwert gemessen an Prüfkörpern, die mit einer Schmelzetemperatur im Spritzguss von 260°C hergestellt wurden, kleiner als 25 ist und ob der Glanzgrad dieser Prüfkörper größer als 95 ist. Des Weiteren wird beurteilt, ob die absolute Änderungen des Gelbwertes und des Glanzgrades bei Anhebung der Verarbeitungstemperatur im Spritzguss von 260°C auf 300°C jeweils kleiner als 10 sind. Dieses entspricht üblichen Anforderungsprofilen an verarbeitungsstabile Formmassen, die zur Einfärbung und für Hochglanzanwendungen vorgesehen sind.

Als Maß für die **Hydrolysebeständigkeit** der Zusammensetzungen dient die relative Änderung des MVRs gemessen gemäß ISO 1133 bei 260°C mit einer Stempellast von 5 kg mit einer Haltezeit von 5 min bei einer 7-tägigen Feucht-Warm-Lagerung (FWL-Lagerung) des Granulats bei 95°C und 100% relativer Luftfeuchte. Dabei wird der relative Anstieg des MVR-Wertes gegenüber dem MVR-Wert vor der entsprechenden Lagerung als ΔMVR(hydr) berechnet, welcher sich durch nachstehende Formel definiert:

$$\Delta MVR(hyrdr) = \frac{MVR(nach\ FWL - Lagerung) - MVR(vor\ Lagerung)}{MVR(vor\ Lagerung)} \bullet 100\%$$

.

Die Neigung zur Ausbildung oberflächiger Defekte mit Bläschentopologie (Blistering) wird an Platten der Geometrie 150 mm x 105 mm x 3,2 mm mit beidseitiger Hochglanzoberfläche ermittelt. Unmittelbar nach dem Spritzguss weisen diese Platten generell keinerlei Blistering auf. Das **Blistering** wird visuell ohne Verwendung vergrößernder technischer Hilfsmittel (Mikroskope, Lupen, etc.) beurteilt nach einer dreitägigen Feucht-Warm-Lagerung dieser Platten bei 40°C und einer relativen Luftfeuchte von >95%. Dabei werden alle visuell sichtbaren Bläschen-Defekte auf beiden Seiten von insgesamt zwei Platten mit den zuvor definierten Abmessungen (d.h. auf einer effektiven Oberfläche von 4 · 15 cm ·10,5 cm = 630 $cm^2$) ausgezählt. Unter dieser rein visuellen Begutachtung ohne vergrößernde technische Hilfsmittel werden der Erfahrung nach alle Defekte mit einem Durchmesser ab etwa 100-200 μm berücksichtigt. Beurteilt wird, ob bei dieser Auszählung weniger als 10 Bläschendefekte beobachtet werden, was einer im Allgemeinen akzeptablen Qualität entspricht.

Tabelle 1

| Komponente | | 1 | 1b | V2 | V3 | V4 | V4b | V5 | V6 | V7 | V8 |
|---|---|---|---|---|---|---|---|---|---|---|---|
| A | Polycarbonat | 60,28 | 60,28 | 60,28 | 60,28 | 60,28 | 60,28 | 60,28 | 60,32 | 60,32 | 60,32 |
| B1 | EDTA | 0,05 | 0,05 | | | | | | | | |
| B2 | Phenylphosphonsäure | | | 0,05 | | | | | | | |
| B3 | Zitronensäure | | | | 0,05 | | | | | | |
| B4 | Oxalsäure | | | | | 0,05 | 0,05 | | | | |
| B5 | Terephthalsäure | | | | | | | 0,05 | | | |
| B6 | Phosphorige Säure | | | | | | | | 0,01 | | |
| B7 | Ca(H2PO4)2 | | | | | | | | | 0,05 | |
| B8 | p-Toluolsulfonsäure | | | | | | | | | | 0,05 |
| C | ABS | 38,61 | 38,61 | 38,61 | 38,61 | 38,61 | 38,61 | 38,61 | 38,61 | 38,61 | 38,61 |
| D1 | Entformungsmittel | 0,74 | 0,74 | 0,74 | 0,74 | 0,74 | 0,74 | 0,74 | 0,74 | 0,74 | 0,74 |
| D2 | Stabilisator | 0,12 | 0,12 | 0,12 | 0,12 | 0,12 | 0,12 | 0,12 | 0,12 | 0,12 | 0,12 |
| D3 | Stabilisator | 0,20 | 0,20 | 0,20 | 0,20 | 0,20 | 0,20 | 0,20 | 0,20 | 0,20 | 0,20 |
| **Compoundierungsbedingungen** | | | | | | | | | | | |
| Drehzahl [U/min] | | 220 | 500 | 220 | 220 | 220 | 500 | 220 | 220 | 220 | 220 |
| **Eigenschaften** | | | | | | | | | | | |
| MVR(300°C/5kg/5min) [ml/10min] | | 61 | 68 | 61 | 59 | 61 | 72 | 60 | 54 | 60 | 59 |
| iMVR(300°C/5kg/15min) [ml/10min] | | 61 | 72 | 66 | 61 | 62 | 96 | 61 | 57 | 60 | 60 |
| AMVR(300°C/5kg, 5min→15min) | | 0% | 6% | 8% | 3% | 2% | 33% | 2% | 6% | 0% | 2% |
| ΔMVR(hydr) [%] | | 58 | 58 | 363 | 59 | 64 | 50 | 68 | 58 | 48 | 96 |
| Gelbwert (260°C) <25 | | ja | ja | ja | ja | ja | | ja | ja | ja | ja |
| ΔGelbwert (260°C→300°C) <10 | | ja | ja | ja | ja | ja | | ja | ja | ja | ja |
| Glanzgrad @ 60° (260°C) >95 | | ja | ja | ja | ja | ja | | ja | ja | ja | ja |
| ΔGlanzgrad @ 60° (260°C→300°C) <10 | | ja | ja | ja | nein | ja | | ja | ja | ja | nein |
| Blistering (<10 Blister / 630 cm2) | | ja | ja | nein | nein | ja | | nein | nein | nein | nein |

Die Beispiele in Tabelle 1 zeigen, dass nur die erfindungsgemäßen Formmassen gemäß Beispiel 1/lb hergestellt mit und enthaltend EDTA als saure Verbindung die erfindungsgemäße Aufgabe vollständig erfüllen, während die Zusammensetzungen gemäß der Vergleichsbeispiele V2 bis V8, hergestellt mit Säuren gemäß dem Stand der Technik, alle mindestens hinsichtlich einer geforderten Eigenschaft vom Zieleigenschaftsprofil abweichen.

Zusammensetzungen hergestellt mit Phenylphosphonsäure (V2) zeigen mangelhafte Hydrolysestabilität und mangelhaftes Blistering-Verhalten.

Zusammensetzungen hergestellt mit Zitronensäure (V3) zeigen mangelhafte Glanzgradstabilität und mangelhaftes Blistering-Verhalten.

Zusammensetzungen hergestellt mit Oxalsäure (V4/V4b) zeigen erhöhten thermisch induzierten Polycarbonatmolekulargewichtsabbau schon während der Compoundierung bei erhöhten Schmelzetemperaturen (d.h. ein mangelhaftes Verarbeitungsfenster bei der Herstellung der Compounds) und darüber hinaus auch mangelhafte Verarbeitungsstabilität im Spritzguss solcher unter verschärften thermischen Bedingungen hergestellten Compounds im Hinblick auf Polycarbonatmolekulargewichtsabbau.

Zusammensetzungen hergestellt mit Terephthalsäure, phosphoriger Säure oder Calciumdihydrogenphosphat (V5-V7) zeigen alle mangelhaftes Blistering-Verhalten.

Zusammensetzungen hergestellt mit p-Toluolsulfonsäure (V8) zeigen mangelhafte Hydrolyse- und Glanzgradstabilität sowie mangelhaftes Blistering-Verhalten.

## Patentansprüche

1. Zusammensetzungen enthaltend

A) mindestens ein Polymer ausgewählt aus der Gruppe der aromatischen Polycarbonate und aromatischen Polyestercarbonate und
B) mindestens eine brönsted-saure Verbindung ausgewählt aus der Gruppe bestehend aus Verbindungen der allgemeinen Formeln (I) und (II)

$$(R1)_{y1}\text{-N-}[R2\text{-}COOH]_{x1} \qquad (I)$$

$$[HOOC\text{-}R2]_{x2}\ (R1)_{y2}N\text{-}(R3)\text{-}N(R1)y_3[R2\text{-}COOH]_{x3} \qquad (II)$$

wobei
R1 für optional funktionalisiertes oder mit Heteroatomen substituiertes Alkyl, Aryl oder Cycloalkyl,
R2 für $C_{1\text{-}}$ bis $C_8$-Alkylen oder $C_2$- bis $C_8$-Alkyliden,
R3 für $-(CH_2)n-$, $-(CH_2)n[O(CH_2)_n]_m-$ oder $-(CH_2)_n[NR4(CH_2)_n]_m$-n für eine ganze Zahl,
m für eine ganze Zahl,
R4 für optional funktionalisiertes oder mit Heteroatomen substituiertes Alkyl, Aryl oder Cycloalkyl,
x1 für eine ganze Zahl zwischen 1 und 3,
x2 und x3 jeweils für 1 oder 2 stehen
und
y1 sich durch die Formel y1 = 3 - x1,
y2 sich durch die Formel y2 = 2 - x2
und y3 sich durch die Formel y3 = 2 - x3
berechnen,
wobei in Verbindungen mit mehreren Resten R1 und/oder R2 diese unabhängig voneinander verschiedene oder gleiche Reste der zuvor genannten Definitionen darstellen können.

2. Zusammensetzungen gemäß Anspruch 1, **dadurch gekennzeichnet, dass** die Komponente B ausgewählt ist aus der Gruppe bestehend aus Ethylendiamintetraessigsäure (EDTA), Nitriloessigsäure, Ethylenglycol-bis(aminoethylether)-N,N,N',N'-tetraessigsäure (EGTA) und Diethylentriaminpentaessigsäure (DTPA).

3. Zusammensetzungen gemäß einem der vorherigen Ansprüche, **dadurch gekennzeichnet, dass** als Komponente B Ethylendiamintetraessigsäure (EDTA) eingesetzt wird.

4. Zusammensetzung gemäß einem der vorherigen Ansprüche, **dadurch gekennzeichnet, dass** die Komponente B in einem Anteil von 0,00001 bis 0,5 Gew.-% in der Zusammensetzung enthalten ist.

**5.** Zusammensetzungen gemäß einem der vorherigen Ansprüche, **dadurch gekennzeichnet, dass** weiterhin als Komponente C eine oder mehrere kautschukhaltige Pfropfpolymerisate und/oder kautschukfreie Vinyl(co)polymerisate enthalten sind.

**6.** Zusammensetzungen gemäß Anspruch 5, **dadurch gekennzeichnet, dass** Komponente C mindestens ein kautschukhaltiges Pfropfpolymerisat hergestellt durch Emulsionspolymerisation enthält.

**7.** Zusammensetzungen gemäß einem der vorherigen Ansprüche, **dadurch gekennzeichnet, dass** mindestens ein Alkali-, Erdalkali-, Aluminium- oder Übergangsmetallsalz einer starken Mineralsäure enthalten ist.

**8.** Zusammensetzungen gemäß Anspruch 7, **dadurch gekennzeichnet, dass** es sich bei dem Salz um Magnesiumsulfat handelt.

**9.** Verfahren zur Herstellung von thermoplastischen Polycarbonat-Zusammensetzungen enthaltend die Schritte (i), (ii) und optional (iii), wobei
in einem ersten Schritt (i)

A) mindestens ein Polymer ausgewählt aus der Gruppe der aromatischen Polycarbonate und aromatischen Polyestercarbonate und
B) mindestens eine brönsted-saure Verbindungen ausgewählt aus der Gruppe bestehend aus Verbindungen der allgemeinen Formeln (I) und (II)

$$(R1)_{y1}\text{-N-}[R2\text{-COOH}]_{x1} \qquad (I)$$

$$[HOOC\text{-}R2]_{x2}(R1)_{y2}N\text{-}(R3)\text{-}N(R1)y_3[R2\text{-COOH}]_{x3} \qquad (II)$$

wobei
R1 für optional funktionalisiertes oder mit Heteroatomen substituiertes Alkyl, Aryl oder Cycloalkyl,
R2 für $C_1$- bis $C_8$-Alkylen oder $C_2$- bis $C_8$-Alkyliden,
R3 für $-(CH_2)n-$, $-(CH_2)n[O(CH_2)_n]_m-$ oder $-(CH_2)n[NR4(CH_2)_n]_m-$,
n für eine ganze Zahl,
m für eine ganze Zahl,
R4 für optional funktionalisiertes oder mit Heteroatomen substituiertes Alkyl, Aryl oder Cycloalkyl,
x1 für eine ganze Zahl zwischen 1 und 3,
x2 und x3 jeweils für 1 oder 2 stehen
und
y1 sich durch die Formel y1 = 3 - x1,
y2 sich durch die Formel y2 = 2 - x2
und y3 sich durch die Formel y3 = 2 - x3
berechnen,
wobei in Verbindungen mit mehreren Resten R1 und/oder R2 diese unabhängig voneinander verschiedene oder gleiche Reste der zuvor genannten Definitionen darstellen können,
und optional weitere Komponenten
durch Zuführung thermischer und/oder mechanischer Energie aufgeheizt werden, mindestens die Komponente A dadurch aufgeschmolzen wird, die Komponenten ineinander dispergiert werden und nachfolgend die resultierende, als Schmelze vorliegende Zusammensetzung optional durch Anlegen eines Unterdrucks entgast wird, wobei mindestens eine der in Schritt (i) eingesetzten Komponenten alkalisch wirkt oder alkalisch wirkende Bestandteile enthält,
und in einem weiteren Schritt (ii)
die resultierende Zusammensetzung durch Abkühlen wieder verfestigt wird und in einem weiteren Schritt (iii) granuliert wird,
wobei diese weiteren Schritte (ii) und (iii) in beliebiger Reihenfolge durchgeführt werden können.

**10.** Verfahren gemäß Anspruch 9, **dadurch gekennzeichnet, dass** die Komponente B ausgewählt ist aus der Gruppe bestehend aus Ethylendiamintetraessigsäure (EDTA), Nitriloessigsäure, Ethylenglycol-bis(aminoethylether)-N,N,N',N'-tetraessigsäure (EGTA) und Diethylentriaminpentaessigsäure (DTPA).

**11.** Verfahren gemäß Anspruch 9 oder 10, **dadurch gekennzeichnet, dass** weiterhin als Komponente C mindestens

ein kautschukhaltiges Pfropfpolymerisat hergestellt durch Emulsionspolymerisation und optional mindestens eine weitere Komponente ausgewählt aus der Gruppe bestehend aus kautschukhaltigen Pfropfpolymerisaten hergestellt durch Masse-, Lösungs-, oder Suspensionspolymerisation und kautschukfreien Vinyl(co)polymerisaten eingesetzt wird und die Komponente C mindestens ein Alkali-, Erdalkali-, Aluminium- oder Übergangsmetallsalz einer starken Mineralsäure enthält.

**12.** Verwendung einer Säure gemäß den allgemeinen Formeln (I) oder (II)

$$(R1)_{y1}\text{-}N\text{-}[R2\text{-}COOH]_{x1} \qquad (I)$$

$$[HOOC\text{-}R2]_{x2}(R1)_{y2}N\text{-}(R3)\text{-}N(R1)y_3[R2\text{-}COOH]_{x3} \qquad (II)$$

wobei
R1 für optional funktionalisiertes oder mit Heteroatomen substituiertes Alkyl, Aryl oder Cycloalkyl,
R2 für $C_1$- bis $C_8$-Alkylen oder $C_2$- bis $C_8$-Alkyliden,
R3 für $-(CH_2)n-$, $-(CH_2)_n[O(CH_2)_n]_m-$ oder $-(CH_2)n[NR4(CH_2)_n]_m-$,
n für eine ganze Zahl,
m für eine ganze Zahl,
R4 für optional funktionalisiertes oder mit Heteroatomen substituiertes Alkyl, Aryl oder Cycloalkyl,
x1 für eine ganze Zahl zwischen 1 und 3,
x2 und x3 jeweils für 1 oder 2 stehen
und
y1 sich durch die Formel y1 = 3 - x1,
y2 sich durch die Formel y2 = 2 - x2
und y3 sich durch die Formel y3 = 2 - x3
berechnen,
und wobei in Verbindungen mit mehreren Resten R1 und/oder R2 diese unabhängig voneinander verschiedene oder gleiche Reste der zuvor genannten Definitionen darstellen können,
zur Stabilisierung von Polycarbonat-Zusammensetzungen.

**13.** Zusammensetzungen hergestellt nach einem der Verfahren gemäß der Ansprüche 9 bis 11.

**14.** Verwendung von Zusammensetzungen gemäß einem der Ansprüche 1 bis 8 und 13 zur Herstellung von Formkörpern.

**15.** Formkörper enthaltend Zusammensetzungen gemäß einem der Ansprüche 1 bis 8 und 13.

## Claims

**1.** Composition containing

A) at least one polymer selected from the group of aromatic polycarbonates and aromatic polyester carbonates and
B) at least one Bronsted-acidic compound selected from the group consisting of compounds of general formulae (I) and (II)

$$(R1)_{y1}\text{-}N\text{-}[R2\text{-}COOH]_{x1} \qquad (I)$$

$$[HOOC\text{-}R2]_{x2}(R1)_{y2}N\text{-}(R3)\text{-}N(R1)_{y3}[R2\text{-}COOH]_{x3} \qquad (II)$$

wherein
R1 represents optionally functionalized or heteroatom-substituted alkyl, aryl or cycloalkyl,
R2 represents $C_1$- to $C_8$-alkylene or $C_2$- to $C_8$-alkylidene,
R3 represents $-(CH_2)n-$, $-(CH_2)_n[O(CH_2)_n]_m-$ or $-(CH_2)_n[NR4(CH_2)_n]_m-$
n is an integer,
m is an integer,
R4 represents optionally functionalized or heteroatom-substituted alkyl, aryl or cycloalkyl,

x1 is an integer between 1 and 3,
x2 and x3 are respectively 1 or 2,
and
y1 is given by the formula y1 = 3 - x1,
y2 by the formula y2 = 2 - x2,
y3 by the formula y3 = 2 - x3,
wherein in compounds having a plurality of radicals R1 and/or R2 these may independently of one another represent different or identical radicals having the abovementioned definitions.

2. Composition according to Claim 1, **characterized in that** component B is selected from the group consisting of ethylenediaminetetraacetic acid (EDTA), nitriloacetic acid, ethylene glycol bis(aminoethylether)-N,N,N',N'-tetraacetic acid (EGTA) and diethylenetriaminepentaacetic acid (DTPA).

3. Composition according to any of the preceding claims, **characterized in that** as component B ethylenediaminetetraacetic acid (EDTA) is employed.

4. Composition according to any of the preceding claims, **characterized in that** component B is present in the composition in a proportion of 0.00001% to 0.5% by weight.

5. Composition according to any of the preceding claims, **characterized in that** furthermore as component C one or more rubber-containing graft polymers and/or rubber-free vinyl (co)polymers are present.

6. Composition according to Claim 5, **characterized in that** component C contains at least one rubber-containing graft polymer produced by emulsion polymerization.

7. Composition according to any of the preceding claims, **characterized in that** at least one alkali metal, alkaline earth metal, aluminum or transition metal salt of a strong mineral acid is present.

8. Composition according to Claim 7, **characterized in that** the salt is magnesium sulfate.

9. Process for producing thermoplastic polycarbonate compositions
containing the steps (i), (ii) and optionally (iii), wherein
in a first step (i)

A) at least one polymer selected from the group of aromatic polycarbonates and aromatic polyester carbonates and
B) at least one Brønsted-acidic compound selected from the group consisting of compounds of general formulae (I) and (II)

$$(R1)_{y1}\text{-N-}[R2\text{-COOH}]_{x1} \qquad (I)$$

$$[HOOC\text{-}R2]_{x2}(R1)_{y2}N\text{-}(R3)\text{-}N(R1)_{y3}[R2\text{-COOH}]_{x3} \qquad (II)$$

wherein
R1 represents an optionally functionalized or heteroatom-substituted alkyl, aryl or cycloalkyl,
R2 represents $C_1$- to $C_8$-alkylene or $C_2$- to $C_8$-alkyidene,
R3 represents $-(CH_2)n-$, $-(CH_2)_n[O(CH_2)_n]_m-$ or $-(CH_2)_n[NR4(CH_2)_n]_m-$,
n is an integer,
m is an integer,
R4 represents optionally functionalized or heteroatom-substituted alkyl, aryl or cycloalkyl,
x1 is an integer between 1 and 3,
x2 and x3 are respectively 1 or 2,
and
y1 is given by the formula y1 = 3 - x1,
y2 by the formula y2 = 2 - x2,
y3 by the formula y3 = 2 - x3,
wherein in compounds having a plurality of radicals R1 and/or R2 these may independently of one another represent different or identical radicals having the abovementioned definitions,

and optionally further components
are heated by supplying thermal and/or mechanical energy to melt at least component A, the components are dispersed in one another and subsequently the resulting composition present in the form of a melt is optionally degassed by applying negative pressure,
wherein at least one of the components employed in step (i) is alkaline or contains alkaline constituents and in a further step (ii)
the resulting composition is resolidified by cooling and in a further step (iii) is pelletized,
wherein these further steps (ii) and (iii) may be performed in any desired sequence.

**10.** Process according to Claim 9, **characterized in that** component B is selected from the group consisting of ethylenediaminetetraacetic acid (EDTA), nitriloacetic acid, ethylene glycol bis(aminoethylether)-N,N,N',N'-tetraacetic acid (EGTA) and diethylenetriaminepentaacetic acid (DTPA).

**11.** Process according to Claim 9 or 10, **characterized in that** furthermore as component C at least one rubber-containing graft polymer produced by emulsion polymerization and optionally at least one further component selected from the group consisting of rubber-containing graft polymers produced by bulk, solution or suspension polymerization and rubber-free vinyl (co)polymers is employed and component C contains at least one alkali metal, alkaline earth metal, aluminum or transition metal salt of a strong mineral acid.

**12.** Use of an acid according to the general formulae (I) or (II)

$$(R1)_{y1}\text{-N-}[R2\text{-COOH}]_{x1} \qquad (I)$$

$$[HOOC\text{-}R2]_{x2}(R1)_{y2}N\text{-}(R3)\text{-}N(R1)_{y3}[R2\text{-COOH}]_{x3} \qquad (II)$$

wherein
R1 represents optionally functionalized or heteroatom-substituted alkyl, aryl or cycloalkyl,
R2 represents $C_1$- to $C_8$-alkylene or $C_2$- to $C_8$-alkylidene,
R3 represents $-(CH_2)n-$, $-(CH_2)_n[O(CH_2)_n]_m-$ or $-(CH_2)_n[NR4(CH_2)_n]_m-$,
n is an integer,
m is an integer,
R4 represents optionally functionalized or heteroatom-substituted alkyl, aryl or cycloalkyl,
x1 is an integer between 1 and 3,
x2 and x3 are respectively 1 or 2,
and
y1 is given by the formula y1 = 3 - x1,
y2 by the formula y2 = 2 - x2,
y3 by the formula y3 = 2 - x3,
and wherein in compounds having a plurality of radicals R1 and/or R2 these may independently of one another represent different or identical radicals having the abovementioned definitions,
for stabilizing polycarbonate compositions.

**13.** Composition produced by a process according to any of Claims 9 to 11.

**14.** Use of compositions according to any of Claims 1 to 8 and 13 for the production of molded articles.

**15.** Molded article containing compositions according to any of claims 1 to 8 and 13.

## Revendications

**1.** Compositions contenant

A) au moins un polymère choisi dans le groupe des polycarbonates aromatiques et des polyestercarbonates aromatiques et
B) au moins un composé de type acide de Brönsted choisi dans le groupe constitué par des composés de formules générales (I) et (II)

$(R1)_{y1}$-N-$[R2\text{-}COOH]_{x1}$ (I)

$[HOOC\text{-}R2]_{x2}(R1)_{y2}$N-(R3)-N$(R1)_{y3}[R2\text{-}COOH]_{x3}$ (II)

dans lesquelles
R1 représente alkyle, aryle ou cycloalkyle, éventuellement fonctionnalisé ou substitué par des hétéroatomes,
R2 représente $C_{1-8}$-alkylène ou $C_{2-8}$-alkylidène,
R3 représente $-(CH_2)n-$, - $(CH_2)_n[O(CH_2)_n]_m$- ou - $(CH_2)_n[NR4(CH_2)_n]_m$-,
n représente un nombre naturel,
m représente un nombre naturel,
R4 représente alkyle, aryle ou cycloalkyle, éventuellement fonctionnalisé ou substitué par des hétéroatomes,
x1 représente un nombre naturel entre 1 et 3,
x2 et x3 représentent à chaque fois 1 ou 2
et
y1 est calculé par la formule y1 = 3 - x1,
y2 est calculé par la formule y2 = 2 - x2,
et y3 est calculé par la formule y3 = 2 - x3, dans lesquels, dans des composés présentant plusieurs radicaux R1 et/ou R2, ceux-ci peuvent représenter indépendamment les uns des autres des radicaux différents ou identiques présentant les définitions précédemment mentionnées.

2. Compositions selon la revendication 1, **caractérisées en ce que** le composant B est choisi dans le groupe constitué par l'acide éthylènediaminetétraacétique (EDTA), l'acide nitriloacétique, l'acide éthylèneglycol-bis(aminoéthyléther)-N,N,N',N'-tétraacétique (EGTA) et l'acide diéthylènetriaminepentaacétique (DTPA).

3. Compositions selon l'une quelconque des revendications précédentes, **caractérisées en ce que** l'acide éthylènediaminetétraacétique (EDTA) est utilisé en tant que composant B.

4. Composition selon l'une quelconque des revendications précédentes, **caractérisée en ce que** le composant B est contenu dans la composition en une proportion de 0,00001 à 0,5% en poids.

5. Compositions selon l'une quelconque des revendications précédentes, **caractérisées en ce qu'**elles contiennent en outre un ou plusieurs polymères greffés caoutchouteux et/ou (co)polymères vinyliques exempts de caoutchouc en tant que composant C.

6. Compositions selon la revendication 5, **caractérisées en ce que** le composant C contient au moins un polymère greffé caoutchouteux préparé par polymérisation en émulsion.

7. Compositions selon l'une quelconque des revendications précédentes, **caractérisées en ce qu'**elles contiennent au moins un sel de métal alcalin, de métal alcalinoterreux, d'aluminium ou de métal de transition d'un acide minéral fort.

8. Compositions selon la revendication 7, **caractérisées en ce que** le sel est le sulfate de magnésium.

9. Procédé pour la préparation de compositions de polycarbonate thermoplastiques contenant les étapes (i), (ii) et éventuellement (iii), dans lequel
dans une première étape (i)

A) au moins un polymère choisi dans le groupe des polycarbonates aromatiques et des polyestercarbonates aromatiques et
B) au moins un composé de type acide de Brönsted choisi dans le groupe constitué par des composés de formules générales (I) et (II)

$(R1)_{y1}$-N-$[R2\text{-}COOH]_{x1}$ (I)

$[HOOC\text{-}R2]_{x2}(R1)_{y2}$N-(R3)-N$(R1)_{y3}[R2\text{-}COOH]x_3$ (II)

dans lesquelles
R1 représente alkyle, aryle ou cycloalkyle, éventuellement fonctionnalisé ou substitué par des hétéroatomes,

R2 représente $C_{1-8}$-alkylène ou $C_{2-8}$-alkylidène,
R3 représente $-(CH_2)n-$, $-(CH_2)_n[O(CH_2)_n]_m-$ ou $-(CH_2)_n[NR4(CH_2)_n]_m-$,
n représente un nombre naturel,
m représente un nombre naturel,
R4 représente alkyle, aryle ou cycloalkyle, éventuellement fonctionnalisé ou substitué par des hétéroatomes,
x1 représente un nombre naturel entre 1 et 3,
x2 et x3 représentent à chaque fois 1 ou 2
et
y1 est calculé par la formule y1 = 3 - x1,
y2 est calculé par la formule y2 = 2 - x2,
et y3 est calculé par la formule y3 = 2 - x3,
dans lequel, dans des composés présentant plusieurs radicaux R1 et/ou R2, ceux-ci peuvent représenter indépendamment les uns des autres des radicaux différents ou identiques présentant les définitions précédemment mentionnées,
et éventuellement d'autres composants sont chauffés par l'introduction d'énergie thermique et/ou mécanique, au moins le composant A est ainsi fondu, les composants sont dispersés les uns dans les autres et ensuite, la composition résultante qui se trouve sous forme de masse fondue est éventuellement dégazée par l'application d'une pression réduite,
dans lequel au moins un des composants utilisés dans l'étape (i) agit de manière alcaline ou contient des ingrédients à action alcalinisante,
et dans une autre étape (ii)
la composition résultante est à nouveau solidifiée par refroidissement
et est granulée dans une autre étape (iii),
ces deux autres étapes (ii) et (iii) pouvant être mises en oeuvre selon un ordre quelconque.

**10.** Procédé selon la revendication 9, **caractérisé en ce que** le composant B est choisi dans le groupe constitué par l'acide éthylènediaminetétraacétique (EDTA), l'acide nitriloacétique, l'acide éthylèneglycol-bis(aminoéthyléther)-N,N,N',N'-tétraacétique (EGTA) et l'acide diéthylènetriaminepentaacétique (DTPA).

**11.** Procédé selon la revendication 9 ou 10, **caractérisé en ce qu'**au moins un polymère greffé caoutchouteux préparé par polymérisation en émulsion et éventuellement au moins un autre composant choisi dans le groupe constitué par les polymères greffés caoutchouteux préparé par polymérisation en masse, en solution ou en suspension et les (co)polymères vinyliques exempts de caoutchouc est en outre utilisé en tant que composant C et le composant C contient au moins un sel de métal alcalin, de métal alcalinoterreux, d'aluminium ou de métal de transition d'un acide minéral fort.

**12.** Utilisation d'un acide selon les formules générales (I) ou (II)

$$(R1)_{y1}\text{-N-}[R2\text{-}COOH]_{x1} \qquad (I)$$

$$[HOOC\text{-}R2]_{x2}(R1)_{y2}N\text{-}(R3)\text{-}N(R1)_{y3}[R2\text{-}COOH]_{x3} \qquad (II)$$

dans lesquelles
R1 représente alkyle, aryle ou cycloalkyle, éventuellement fonctionnalisé ou substitué par des hétéroatomes,
R2 représente $C_{1-8}$-alkylène ou $C_{2-8}$-alkylidène,
R3 représente $-(CH_2)n-$, $-(CH_2)_n[O(CH_2)_n]_m-$ ou $-(CH_2)_n[NR4(CH_2)_n]_m-$,
n représente un nombre naturel,
m représente un nombre naturel,
R4 représente alkyle, aryle ou cycloalkyle, éventuellement fonctionnalisé ou substitué par des hétéroatomes,
x1 représente un nombre naturel entre 1 et 3,
x2 et x3 représentent à chaque fois 1 ou 2
et
y1 est calculé par la formule y1 = 3 - x1,
y2 est calculé par la formule y2 = 2 - x2,
et y3 est calculé par la formule y3 = 2 - x3,
et dans laquelle, dans des composés présentant plusieurs radicaux R1 et/ou R2, ceux-ci peuvent représenter indépendamment les uns des autres des radicaux différents ou identiques présentant les définitions précédemment mentionnées,

pour la stabilisation de compositions de polycarbonate.

**13.** Compositions préparées par l'un des procédés selon les revendications 9 à 11.

**14.** Utilisation de compositions selon l'une quelconque des revendications 1 à 8 et 13 pour la préparation d'articles moulés.

**15.** Articles moulés contenant des compositions selon l'une quelconque des revendications 1 à 8 et 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 8502622 A1
- JP 2018332 B
- US 20060287422 A1
- EP 0576950 A2
- WO 2007065579 A1
- WO 2010063381 A1
- WO 2009118114 A1
- WO 2013060687 A1
- WO 2013060685 A1
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE 2407674 A
- DE 2407776
- DE 2715932
- DE 1900270 A
- US PS3692744 A


### In der Beschreibung aufgeführte Nicht-Patentliteratur


- **SCHNELL.** Chemistry and Physics of Polycarbonates. Interscience Publishers, 1964
- **W. SCHOLTAN ; H. LANGE.** *Kolloid, Z. und Z. Polymere,* 1972, vol. 250, 782-796
- **M. HOFFMANN ; H. KRÖMER ; R. KUHN.** Polymeranalytik I und II. Georg Thieme-Verlag, 1977
- Kunststoff-Handbuch. Carl-Hanser-Verlag, 1973, vol. VIII, 695 ff